# EUROPÄISCHE PATENTSCHRIFT

(11) **EP 0 918 010 B1**
(45) Veröffentlichungstag und Bekanntmachung des Hinweises auf die Patenterteilung: **26.05.2004**
(21) Anmeldenummer: 98121150.1
(22) Anmeldetag: 11.11.1998
(51) Int. Cl.: B62B 3/14, B60B 33/00

(54) **Einkaufswagen**
Shopping trolley
Chariot d'achats

(30) Priorität: 22.11.1997 DE 19751849; 22.11.1997 DE 19751848
(43) Veröffentlichungstag der Anmeldung: 26.05.1999
(73) Patentinhaber: WANZL METALLWARENFABRIK GMBH, D-89336 Leipheim (DE)
(72) Erfinder: Eberlein, Herbert, 89347 Bubesheim (DE); Blaha, Martin, 89335 Ichenhausen (DE)

(56) Entgegenhaltungen:
- WO-A-97/43135
- DE-A- 4 030 329

## Beschreibung

Die Erfindung betrifft einen Einkaufswagen, dessen mit Fahrrollen ausgestattetes und gewöhnlich zum Tragen eines Korbes bestimmtes Fahrgestell zwei die Längsseiten und die Stirnseite des Fahrgestelles bildende Stäbe aufweist, die an den Längsseiten übereinander und an der Stirnseite nebeneinander angeordnet und durch Verbindungsteile zu einem Rahmen verschweißt sind.

DE-A-40 30 329 offenbart einen Einkaufswagen, dessen mit Fahrrollen ausgestattetes Fahrgestell zwei die Längsseiten und die Stirnseite des Fahrgestelles bildende Stäbe aufweist, die übereinander und durch Verbindungsteile zu einem Rahmen verschweißt sind.

Die Stirnseiten der Fahrgestelle bekannter Einkaufswagen sind im täglichen Einsatz oft starken Stoßbelastungen ausgesetzt. Deshalb müssen die Stirnseiten so stabil sein, dass auch bei starken Stößen die Laufeigenschaften der an dieser Stelle angeordneten vorderen Fahrrollen nicht beeinträchtigt werden.

Einkaufswagen, deren Fahrrollen als schwenkbare Lenkrollen gestaltet sind, neigen beim Fahren oft zum seitlichen Abdriften, was als störend empfunden wird. Als Abhilfe schlägt deshalb das deutsche Gebrauchsmuster G 84 08 911.3 vor, die ansonsten senkrecht angeordneten Schwenkachsen der vorderen Fahrrollen in Schieberichtung des Einkaufswagens leicht geneigt anzuordnen. Diese auch als "Sturz" bezeichnete Anordnung bewirkt. dass die schwenkbaren Fahrrollen immer bestrebt sind, exakt geradeaus zu rollen und ein Schwenken der Fahrrollen um ihre nunmehr leicht schräg angeordneten Schwenkachsen erschwert wird. Um diese Schrägstellung zu erreichen, beschreibt das genannte Gebrauchsmuster verschiedene Lösungsmöglichkeiten. Angefangen vom Abbiegen von nach unten gerichteten, aus Rohren bestehenden Tragholmen für die Fahrrollen über den Einsatz abgewinkelter Befestigungsplatten bis hin zu einer schräg angeordneten Querstrebe oder zu abgeschrägten Befestigungsplatten die zum Befestigen der Fahrrollen bestimmt sind, zeigt das Gebrauchsmuster Lösungsmöglichkeiten auf, die nicht befriedigend sind.

Das Abbiegen der Tragholme in der geschilderten Weise erweist sich als schwierig, da die nach hinten weitergeführten Tragholme auseinanderstrebend angeordnet sein müssen, damit derartige Einkaufswagen platzsparend ineinander geschoben werden können. Bei dieser Lösung entstehen in nachteiliger Weise spiegelbildlich gestaltete Tragholme, die nicht gegeneinander vertauschbar sind.
Abgewinkelte Befestigungsplatten wiederum müssen genau gebogen und exakt in Schieberichtung des Einkaufswagens ausgerichtet an den Tragholmen angeschweißt sein, um den angestrebten Vorteil zu erzielen. Auch diese Lösung ist aufwendig. Gleiches gilt für die schräg anzubringende Querstrebe. Um die Schrägstellung zu erreichen, sind paarweise zwei unterschiedlich lange, von den Tragholmen aus nach unten gerichtete Stützteile erforderlich, welche die Querstrebe tragen. Diese Konstruktion ist kostenintensiv.
Abgeschrägte Befestigungsplatten wiederum sind in ihrer Herstellung sehr teuer und sie müssen ebenfalls exakt angebracht sein, um die vorderen Fahrrollen parallel in Schieberichtung ausgerichtet befestigen zu können. Erfolgt dies nicht, macht sich verstärkter Abrieb an den Laufrädern der vorderen Fahrrollen bemerkbar.

Es ist Aufgabe der Erfindung, das Fahrgestell eines gattungsgemäßen Einkaufswagens auf einfachste Weise so zu gestalten, dass die Stirnseite imstande ist, schadlos auch starke Stöße aufzunehmen, so dass die Lauteigenschaften der vorderen Fahrrollen keine Beeinträchtigungen erfahren.

Die Aufgabe ist erfindungsgemaiß dadurch gelöst. dass an der Unterseite der die Stirnseite bildenden Stababschnitte zwei Stützelemente angeschweißt sind, die zum Befestigen zweier Fahrrollen bestimmt sind und die beiden Stababschnitte verbinden.

Aufbauend auf die eben geschilderte Lösung besteht eine erweitert gestellte Aufgabe darin, das Fahrgestell des Einkaufswagens auf ebenfalls einfachste Weise so weiterzuentwickeln, dass der Einkaufswagen beim Schieben bestrebt ist, von selbst die Geradeausfahrt beizubehalten.

Die Lösung dieser Aufgabe besteht darin, dass der vordere Stababschnitt tiefer angeordnet ist als der hintere Stababschnitt.

Das Anschweißen von platten- oder scheibenartigen Stützelementen an der Unterseite der Stababschnitte sowie das dadurch einhergehende ortsfeste Verbinden der beiden Stababschnitte lässt eine äußerst stabile Stirnseite des Fahrgestelles entstehen, die den rauhen Bedingungen, welchen Einkaufswagen in der Praxis ausgesetzt sind, standhalten. In Seitenansicht der Stirnseite betrachtet entsteht durch die auf Abstand gehaltenen Stababschnitte und durch die Stützelemente ein Rahmenprofil, das an ein "U" erinnert. Während die Querschnittsflächen der Stababschnitte die Schenkel dieses "U" bilden, übernehmen die Stützelemente das Zwischenstück, welches die beiden so gestalteten Schenkel verbindet. Die Stirnseite des Fahrgestelles weist somit ein hohes Widerstandsmoment auf, so dass Stöße, die auf den vorderen der beiden Stababschnitte oder auf die Laufräder der Fahrrollen wirken, durch die so gestaltete Stirnseite des Fahrgestelles schadlos aufgenommen werden. Die Stirnseite des Fahrgestelles wird nicht verbogen und die senkrechten Schwenkachsen für die Fahrrollen behalten ihre exakte Lage bei. Die Stützelemente tragen somit nicht nur zur Erhöhung der Stabilität der Stirnseite des Fahrgestelles bei, sondern sie übernehmen auch noch zusätzlich die Funktion von Befestigungselementen für die vorderen Fahrrollen. Diese konstruktiven Merkmale ermöglichen eine kostengünstige Anfertigung der Stirnseite des Fahrgestelles.

Die bezüglich der angestrebten Geradeausfahrt aufgefundene Lösung besticht durch ihre verblüffende Einfachheit. Das simple Tiefersetzen des vorderen Stababschnittes bewirkt, dass die an den Stababschnitten angeschweißten plattenförmigen Stützelemente eine leicht schräge Lage einnehmen, so dass die Schwenkachsen der an den Stützelementen zu befestigenden Fahrrollen die gewünschte, in Schieberichtung des Einkaufswagens leicht geneigte Lage einnehmen. Die Fahrrollen erhalten somit den erwünschten Sturz. Zum Tiefersetzen des vorderen Stababschnittes bedarf es keines weiteren Arbeitsganges, da der vordere Stababschnitt, der dem oberen Stab angehört, ohnehin nach unten gebogen werden muss. Auch die Stützmittel sind etwas dickere Scheiben einfachster Ausführung. Ihre beiden planen Flächen verlaufen parallel. Die Stützelemente lassen sich somit als einfache Stanzteile anfertigen. Sie brauchen nicht angeschrägt zu werden. Die vorgeschlagene Lösung ist somit auch äußerst kostengünstig.

Die Erfindung wird anhand von Ausführungsbeispielen näher erläutert. Es zeigt
- Fig. 1: einen Einkaufswagen;
- Fig. 2: die Stirnseite eines Fahrgestelles eines Einkaufswagens im Schnitt sowie
- Fig. 3: ebenfalls eine Stirnseite eines Fahrgestelles mit tiefer gelegenem vorderen Stababschnitt.

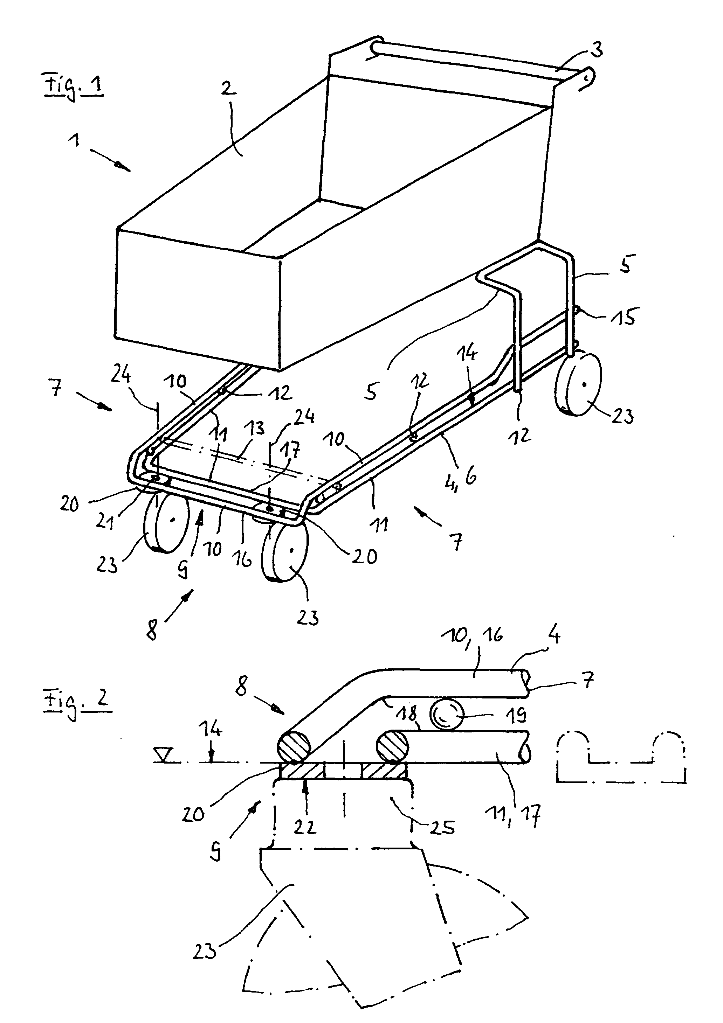

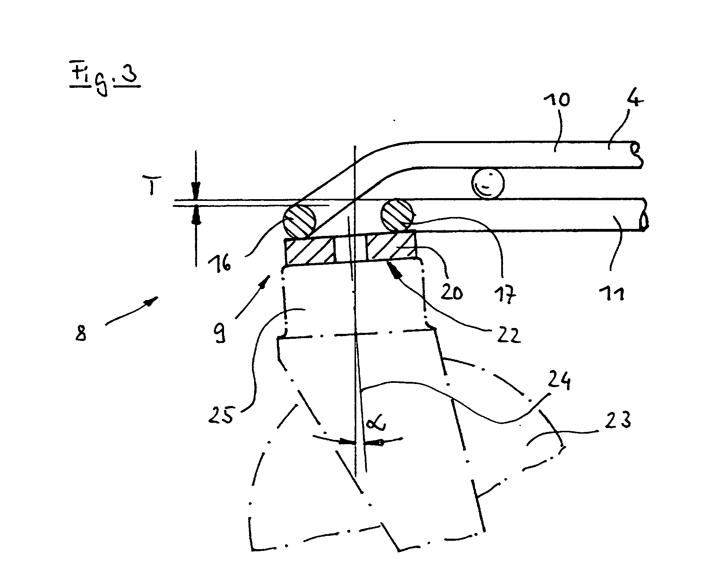

Der in Fig. 1 dargestellte Einkaufswagen 1 weist ein Fahrgestell 4 auf, das üblicherweise einen Korb 2 zur Aufnahme von Ware trägt. Das Fahrgestell 4, insbesondere dessen Rahmen 6, ist auch bei anderen bekannten Einkaufswagen 1 verwendbar. Am hinteren Ende des Rahmens 6 ragen zu beiden Seiten Stützen 5 nach oben, auf welchen der Korb 2 ruht. Der mit einer Schiebeeinrichtung 3 ausgestattete Einkaufswagen 1 ist in bekannter Weise konisch so gestaltet, dass er mit gleichen Einkaufswagen 1 platzsparend gestapelt werden kann. Das Fahrgestell 4 trägt vorne und hinten je zwei Fahrrollen 23. Der Rahmen 6 des Fahrgestelles 4 wird in der Hauptsache durch je einen die Längsseiten 7 und die Stirnseite 8 des Fahrgestelles 4 bildenden Stab, und zwar einen oberen Stab 10 und einen unteren Stab 11 geschaffen die durch Verbindungsteile 12 wie Kugeln, kleine Stabstücke und dergleichen verbunden sind. Der an den Längsseiten 7 untere Stab 11 bleibt auf seiner gesamten Länge auf einer Ebene 14, während der obere Stab 10, ausgehend von seinen hinteren Enden 15 beidseitig nach kurzer Wegstrecke nach unten geführt ist und in geringem Abstand über dem unteren Stab 11 angeordnet ist. Nach Verlassen der Längsseiten 7 des Rahmens 6 ist der obere Stab 10 erneut nach unten geführt und bildet anschließend einen querverlaufenden vorderen Stababschnitt 16, der etwas tiefer angeordnet ist als der hintere, ebenfalls querverlaufende Stababschnitt 17 des Stabes 11. Der hintere Stababschnitt 17 ist in einem Abstand zum vorderen Stababschnitt 16 angeordnet. Die Stababschnitte 16, 17 bilden die Stirnseite 8 des Fahrgestelles 4. An der Unterseite 9 der so gestalteten Stirnseite 8 sind zwei plattenförmige Stützelemente 20 angeschweißt, die als gleichmäßig starke Stanzteile gestaltet die Stababschitte 16, 17 verbinden. Im Beispiel sind die Stützelemente 20 scheibenförmig gestaltet, die mittig einen Durchbruch 21 aufweisen, wobei die Durchbrüche 21 zur Aufnahme von Befestigungsmitteln vorgesehen sind, die zum Befestigen der beiden vorderen Fahrrollen 23 bestimmt sind. Im Beispiel sind die vorderen Fahrrollen 23 als Lenkrollen gestaltet, deren Schwenkachsen 24 entweder senkrecht (Fig. 2) oder leicht nach vorne geneigt (Fig. 3) angeordnet sind.

Fig. 2 zeigt in einem Schnitt die Anordnung eines Stützelementes 20 an der Stirnseite 8 des Fahrgestelles 4. Die Stababschnitte 16, 17 des oberen und unteren Stabes 10, 11 befinden sich auf der gemeinsamen Ebene 14. Man erkennt auch sehr gut den nach unten auf diese Ebene 14 herabgeführten oberen Stab 10. An der Unterseite 9 der beiden Stababschnitte 16, 17 ist das Stützelement 20 angeschweißt. Es verbindet ortsfest die beiden Stababschnitte 16, 17, so dass im Querschnitt betrachtet das eingangs erwähnte "U" (nebenstehend angedeutet) entsteht. Strichpunktiert ist eine Fahrrolle 23 eingezeichnet, die mit ihrem Kopf 25 an der Unterseite 22 des Stützelementes 20 anliegt und durch ein nicht näher dargestelltes Befestigungsmittel, üblicherweise eine Schraube nebst Mutter, am Stützelement 20 und damit am Fahrgestell 4 angeschraubt ist.
Um im Bedarfsfalle die Stabilität der Stirnseite 8 noch weiter erhöhen zu können ist es vorteilhaft, vgl. auch Fig. 1, an den Längsseiten 7 und unmittelbar im Anschluß an die beiden Krümmungen 18 des unteren Stabes 11. welche ausgehend von den Längsseiten 7 in den Stababschnitt 7 führen, je ein die Stäbe 10, 11 verbindendes Verbindungselement 19 einzuschweißen.

Der Fachmann erkennt anhand der Zeichnung, dass durch diese zusätzliche Maßnahme eine Stirnseite 8 für das Fahrgestell 4 geschaffen ist, die ein hohes Widerstandsmoment aufweist. Insbesondere von vorne auf die Fahrrollen 23 einwirkende Stöße, in der Zeichnung entsteht ein linksdrehendes Moment, werden durch die Stützelemente 20 und durch die Verbindungselemente 19 wirksam abgefangen. Anstelle der Verbindungselemente 19 kann der in der Fig. 1 beschriebene Querstab 13 treten.

Fig. 3 zeigt in einem Schnitt die leicht schräge Anordnung eines Stützelementes 20 an der Stirnseite 8 des Fahrgestelles 4. Bezogen auf die Laufebene der Fahrrollen 23 ist der vordere Stababschnitt 16 etwas tiefer (Maß T) angeordnet als der hintere Stababschnitt 17. An der Unterseite 9 der Stababschnitte 16, 17 ist das Stützelement 20 angeschweißt. Es verbindet ortsfest die beiden Stababschnitte 16. 17. Strichpunktiert ist eine Fahrrolle 23 eingezeichnet, die mit ihrem Kopf 25 an der Unterseite 22 des Stützelementes 20 anliegt und durch ein nicht näher dargestelltes Befestigungsmittel, üblicherweise eine Schraube nebst Mutter, am Stützelement 20 und damit am Fahrgestell 4 angeschraubt ist. Die in Schieberichtung des Einkaufswagens 1 geneigte Lage der Schwenkachse 24 der Fahrrolle 23 wird in der Zeichnung durch den Winkel α verdeutlicht.

Der obere und der untere Stab 10, 11 lassen sich im Bereich der Stirnseite 8 auch so biegen und anordnen. dass der vordere Stababschnitt 16 Bestandteil des unteren Stabes 11 ist.

## Patentansprüche

1. Einkaufswagen (1), dessen mit Fahrrollen (23) ausgestattetes und gewöhnlich zum Tragen eines Korbes (2) bestimmtes Fahrgestell (4) zwei die Längsseiten (7) und die Stirnseite (8) des Fahrgestelles (4) bildende Stäbe (10, 11) aufweist, die an den Längsseiten (7) übereinander und an der Stirnseite (8) nebeneinander angeordnet und durch Verbindungsteile (12) zu einem Rahmen (6) verschweißt sind, **dadurch gekennzeichnet, dass** an der Unterseite (9) der die Stirnseite (8) bildenden Stababschnitte (16, 17) zwei Stützelemente (20) angeschweißt sind, die zum Befestigen zweier Fahrrollen (23) bestimmt sind und die beiden Stababschnitte (16, 17) verbinden.

2. Einkaufswagen (1) nach Anspruch 1, **dadurch gekennzeichnet, dass** der vordere Stababschnitt (16) tiefer angeordnet ist als der hintere Stababschnitt ( 17).

3. Einkaufswagen nach Anspruch 1 oder 2, **dadurch gekennzeichnet, dass** der vordere Stababschnitt (16) entweder Bestandteil des Stabes (10) oder des Stabes (11) ist.

4. Einkaufswagen nach einem der Ansprüche 1 bis 3, **dadurch gekennzeichnet, dass** die Stützelemente (20) scheibenförmig gestaltet und mittig mit einem Durchbruch (21) ausgestattet sind.

5. Einkaufswagen nach einem der Ansprüche 1 bis 4, **dadurch gekennzeichnet, dass** an den Längsseiten (7) des Fahrgestelles (4) und unmittelbar im Anschluß an die beiden Krümmungen (18) des unteren Stabes (11), welche ausgehend von den Längsseiten (7) in den Stababschnitt (17) führen, je ein die Stäbe (10, 11) verbindendes Verbindungselement (19) eingeschweißt ist.

6. Einkaufswagen nach einem der Ansprüche 1 bis 5, **dadurch gekennzeichnet, dass** anstelle der Verbindungselemente (19) ein in gleicher Weise angeordneter, die Längsseiten (7) verbindender Querstab (13) vorgesehen ist.

## Claims

1. A shopping trolley (1) having a wheel frame (4) which is fitted with casters (23) and is generally intended to carry a basket (2) and comprises two bars (10, 11) which form the longitudinal sides (7) and the front end (8) of the wheel frame (4), are arranged one above the other at the longitudinal sides (7) and side by side at the front end (8) and are welded together by connecting parts (12) to form a frame (6), **characterised in that** two supporting members (20), which are provided for mounting two casters (23) and connect the two bar portions (16, 17) forming the front end (8), are welded onto the underside (9) of said bar portions (16, 17).

2. A shopping trolley (1) according to claim 1, **characterised in that** the front bar portion (16) is arranged lower than the rear bar portion (17).

3. A shopping trolley according to claim 1 or 2, **characterised in that** the front bar portion (16) is either part of the bar (10) or part of the bar (11).

4. A shopping trolley according to any one of claims 1 to 3, **characterised in that** the supporting members (20) are disc-shaped and are provided centrally with an opening (21).

5. A shopping trolley according to any one of claims 1 to 4, **characterised in that** a connecting member (19) connecting the bars (10, 11) is welded in on each longitudinal side (7) of the wheel frame (4) directly adjacent to the two bends (18) of the lower bar (11), the bends (18) starting from the longitudinal sides (7) and leading into the bar portion (17).

6. A shopping trolley according to any one of claims 1 to 5, **characterised in that**, instead of the connecting members (19), a crossbar (13) arranged in the same way and connecting the longitudinal sides (7) is provided.

## Revendications

1. Chariot à provisions (1) dont le châssis de roulement (4), équipé de roulettes (23) et habituellement destiné à porter un panier (2), comporte deux baguettes (10, 11) qui matérialisent les côtés longitudinaux (7) et la face extrême (8) dudit châssis de roulement (4), sont agencées en superposition sur les côtés longitudinaux (7) et en juxtaposition sur la face extrême (8), et sont assemblées par soudage au moyen de pièces de solidarisation (12), pour former un cadre (6), **caractérisé par le fait que** deux éléments d'appui (20), rapportés par soudage à la face inférieure (9) des segments de baguettes (16, 17) matérialisant la face extrême (8), sont destinés à fixer deux roulettes (23) et relient les deux segments de baguettes (16, 17).

2. Chariot à provisions (1) selon la revendication 1, **caractérisé par le fait que** le segment de baguette antérieur (16) occupe une position plus basse que le segment de baguette postérieur (17).

3. Chariot à provisions selon la revendication 1 ou 2, **caractérisé par le fait que** le segment de baguette antérieur (16) fait partie intégrante soit de la baguette (10), soit de la baguette (11).

4. Chariot à provisions selon l'une des revendications 1 à 3, **caractérisé par le fait que** les éléments d'appui (20) sont de configuration discoïdale et présentent une perforation (21) en leur centre.

5. Chariot à provisions selon l'une des revendications 1 à 4, **caractérisé par le fait qu'**un élément respectif de solidarisation (19), reliant les baguettes (10, 11), est intégré par soudage sur les côtés longitudinaux (7) du châssis de roulement (4) et dans la continuité directe des deux coudes (18) de la baguette inférieure (11), qui fusionnent dans le segment de baguette (17) à partir desdits côtés longitudinaux (7).

6. Chariot à provisions selon l'une des revendications 1 à 5, **caractérisé par le fait qu'**une baguette transversale (13), reliant les côtés longitudinaux (7) et agencée de manière identique, est prévue à la place des éléments de solidarisation (19).
